# EUROPÄISCHE PATENTSCHRIFT

(11) **EP 1 146 471 B1**
(45) Veröffentlichungstag und Bekanntmachung des Hinweises auf die Patenterteilung: **23.11.2005**
(21) Anmeldenummer: 00108253.6
(22) Anmeldetag: 14.04.2000
(51) Int. Cl.: G06K 9/20, A61B 5/117

(54) **Kapazitiver biometrischer Sensor**
Capacitive biometric sensor
Capteur biométrique capacitif

(43) Veröffentlichungstag der Anmeldung: 17.10.2001
(73) Patentinhaber: Infineon Technologies AG, 81669 München (DE)
(72) Erfinder: Greschitz, Manfred, 8045 Graz (AT); Wolf, Franz, 8010 Graz (AT); Gruber, Klaus, 8010 Graz (AT); Helminger, Franz, 8020 Graz (AT)
(74) Vertreter: Epping - Hermann - Fischer

(56) Entgegenhaltungen:
- WO-A-98/52157

## Beschreibung

Die Erfindung betrifft einen kapazitiven biometrischen Sensor, insbesondere einen Fingerabdrucksensor, mit einem Halbleiter-Sensorchip, dessen aktive, von einer zu identifizierenden Person zu berührende Fläche als Sensorfeld mit einer Vielzahl von in einer rechteckförmigen Matrix angeordneten Sensorelektroden ausgebildet ist, die mit einer sich über das gesamte Sensorfeld erstreckenden Schutzschicht abgedeckt sind, wobei der Sensor aus den elektrischen Impulsen jeder Sensorelektrode einen lokalen, digitalisierten Graustufenwert erstellt, und wobei diese Graustufenwerte in ihrer Gesamtheit zur Identifikation weiter auswertbar sind.

Derartige Sensoren sind bereits auf dem Markt erhältlich.

Der bekannte Sensor erlaubt insbesondere zuverlässiges Einlesen und Auswerten des Fingerabdruckes. Überall dort, wo der Nutzer derzeit noch persönliche Geheimnummern und Passwörter verwenden muss, wie bei Handys oder PCs, Scheck- und Kreditkarten, genügt in Zukunft der eigene Finger. Das rechteckige Sensorfeld optimiert die Erkennungsleistung sowohl bei der Erstellung des Referenzdatensatzes als auch bei jeder späteren Überprüfung. Mit einer Fläche von weniger als 160 mm² kann der Sensor auch auf sehr kleinen Geräten, insbesondere auch Chipkarten, eingesetzt werden.

Die Funktionsweise des kapazitiven Sensors besteht, anders als bei den früher bekannten optischen Scannern, nicht im "Abfotografieren", sondern im Wesentlichen darin, daß bei Aufliegen eines Fingers auf dem Sensorfeld dort 65000 nebeneinander angeordnete Sensorelektroden, die jeweils ein Pixel repräsentieren, jeweils lokal den exakten Abstand zwischen Hautoberfläche und Sensor vermessen und somit die Hautstruktur abbilden. Dies gelingt durch Ausnutzung des Kapazitätsunterschiedes zwischen Linien und Tälern des Fingerabdrucks, der sich bei aufliegendem Finger, dessen unterschiedliche Stellen jeweils die Gegenelektrode zur unterhalb dieser Stelle befindlichen Sensorelektrode bilden, ergibt.

Nach weniger als hundert ms erstellt der Sensor ein digitalisiertes Graustufenbild des Fingerabdrucks mit einer lateralen Auflösung von 20 Einzelpunkten je Millimeter (513 dpi). Eine bildverarbeitende Software wertet anschließend das Graustufenbild nach den charakteristischen Merkmalen des Fingerabdrucks, den sogenannten Minutien, aus, und speichert deren Aussehen, Lage und Ausrichtung. Bei der späteren Überprüfung vergleicht ein Auswertealgorithmus das Sensorbild mit den zuvor abgespeicherten Referenzdaten. Im typischen Anwendungsfall erfolgt dann das Freigabesignal des Sensorchips zur Aktivierung eines Geräts nur, wenn die beiden Datensätze übereinstimmen.

Maßgebend für den bestimmungsgemäßen Gebrauch des Sensors ist nicht nur die bereits erwähnte horizontale Feinheit der Auflösung in der Ebene des Sensorfeldes, sondern ebenso die davon zu unterscheidende Tiefen- oder Kontrastauflösung jedes einzelnen Pixels. Aufgrund der 8-bit Datentiefe jedes Pixels resultiert ein Spektrum von 256 Graustufen, wobei in diesem Zusammenhang der Grauwert 0 "schwarz " und der Grauwert 255 "weiß" bedeutet. Ein tatsächliches Graustufenbild des Fingerabdrucks zeigt jedoch niemals diese volle Bandbreite. Der maximal erhältliche lokale Kontrast ist in der Praxis vielmehr durch die maximale Differenz zwischen dem einer Fingerlinie (Hautfeuchtigkeit) entsprechenden ersten Graustufenwert und dem einem Fingertal (Luft) entsprechenden zweiten Graustufenwert gegeben. Üblicherweise wird jedoch die Häufigkeitsverteilung mehrerer einzelner Kontrastauflösungen in einem Histogramm betrachtet. Der Abstand der beiden Häufungs-Maxima (also Hautfeuchtigkeit bzw. Wasser einerseits und Luft andererseits) wird dynamische Auflösung des Sensors genannt.

Die Bestimmung der dynamischen Auflösung erfolgt derzeit entweder unmittelbar durch Auflegen eines Fingers auf den Sensor, oder durch ebenfalls kontaktbehaftete, mechanische Hilfsmittel. Zur Messung der sogenannten "Wasserlinie" prinzipiell geeignet ist die Befüllung des Sensorfeldes mit Wasser, während in der Praxis üblicherweise ein Prüfstempfel verwendet wird. In einer zweiten Messung muß, bei unbedecktem Sensorfeld, die "Luftlinie" aufgenommen werden.

An die Überprüfung der dynamischen Auflösung jedes einzelnen Sensorchips ist vor allem am Ende des Produktionsprozesses zu denken, insbesondere dann, falls nichtfunktionelle Sensorchips nicht durch aufwendige elektrische Tests, sondern einfach durch die Überprüfung bzw. Bestimmung des zentralen Funktionselementes "dynamische Auflösung" erkannt und gegebenenfalls herausgefiltert werden sollen. Die bisherigen kapazitiven Sensoren machen jedoch die zuvor beschriebene aufwendige Art der Bestimmung der dynamischen Auflösung erforderlich.

Ziel der vorliegenden Erfindung ist es, einen kapazitiven Sensor der eingangs genannten Art so zu gestalten, daß eine einfache Bestimmung der dynamischen Auflösung, insbesondere ohne kontaktbehaftete externe Hilfsmittel, ermöglicht ist.

Erfindungsgemäß wird dieses Ziel bei einem kapazitiven Fingerabdrucksensor der eingangs genannten Art dadurch erreicht, daß, zur Bestimmung des im Anwendungsfall tatsächlich erreichbaren maximalen Kontrasts der Graustufenwerte (dynamische Auflösung des Sensors), auf dem Sensorfeld mindestens ein Messpunkt aus einem dielektrischen Material oberhalb jeweils einer der Sensorelektroden integriert ist.

Durch die erfindungsgemäß vorgesehenen Messpunkte werden bei der Messung der dynamischen Auflösung die Sensoreigenschaften selbst genutzt, um ohne mechanische Kontaktierung die Qualität des Sensors zu überprüfen. Während für die Bestimmung der dynamischen Auflösung grundsätzlich bereits ein einziger durch einen Messpunkt abgedeckter Pixel ausreichend ist, eröffnen sich darüber hinaus mit zunehmender Anzahl der Messpunkte, und insbesondere mit deren gleichmäßiger Verteilung über das Sensorfeld, weitergehende Messmöglichkeiten.

Vorteilhafte Ausgestaltungen ergeben sich aus den Unteransprüchen.

Die Erfindung wird nachfolgend an Auführungsbeispielen anhand der Zeichnungen näher erläutert. Es zeigt
Figur 1 eine schematische perspektivische Ansicht eines erfindungsgemäßen Sensors,
Figur 2 eine geschnittene Seitenansicht des Sensors gemäß Figur 1,
Figur 3 ein Histogramm der mit dem erfindungsgemäßen Sensor aufgenommenen Messwerte.

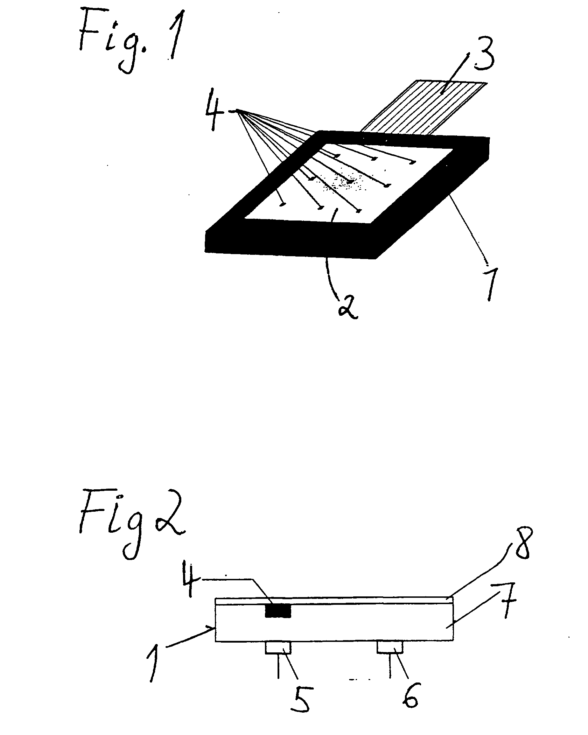

Figur 1 zeigt beispielhalber einen mit Hilfe der an sich bekannten CMOS-Halbleitertechnologie gefertigten Sensorchip 1. Die aktive Fläche des Sensorschips 1 ist durch das rechteckige Sensorfeld 2 gegeben, auf das im Betrieb der zu identifizierende Finger aufgelegt wird. Die vorzugsweise bereits im Sensorchip 1 digitalisierten Daten können beispielsweise mittels des dargestellten Flexbandes 3, also einer flexiblen Leiterplatte, mit weiteren Daten-, insbesondere bildverarbeitenden und speichernden Chips verbunden werden. Der Sensorchip 1 kann prinzipiell zusammen mit Speicher und Rechner auf einer einzigen Chipkarte integriert sein.

Erkennbar in Figur 1 sind auch die auf der Oberfläche des Sensors integrierten kleinen Messpunkte 4. Durch die bei dieser Ausführung vorhandenen neun Messpunkte 4 läßt sich offensichtlich bereits eine gute Gleichverteilung auf dem Sensorfeld 2 erreichen. Grundsätzlich ergibt sich die dynamische Auflösung bereits aus dem Unterschied der Graustufenwerte eines durch einen Messpunkt 4 abgedeckten Pixels zu einem der umgebenden, nur mit Luft abgedeckten Pixel. Die wenigen Messpunkte 4 andererseits stören im Anwendungsfall, also bei aufgelegtem Finger, nicht merklich hinsichtlich der lateralen Auflösung, zumal fertigungsbedingt sowieso mit Fehlerpixeln zu rechnen ist.

Wie in Figur 2 gezeigt ist, befindet sich der einer bestimmten Sensorelektrode 5 zugeordnete Messpunkt 4 genau oberhalb der jeweiligen Sensorelektrode 5. Alle Sensorelektroden 5 und 6 sind in an sich bekannter Weise über das gesamte Sensorfeld 2 hinweg mit einer Schutzschicht 7, etwa aus Siliciumoxyd, bedeckt. Die Integration der Messpunkte 4 in die Oberfläche des Sensorchips 1 kann mit den üblichen Prozesstechnolgien erfolgen. Das dielektrische, vorzugsweise metallische Material für die Messpunkte 4, kann beispielsweise durch Ätzen und anschließendes Befüllen in die Schutzschicht 7 eingebettet werden. Ein anschließender CMP (chemical mechanical polishing)-Schritt führt zu einer ausreichenden Planarisierung, so dass nachfolgend mittels einer weiteren Passivierungsschicht 8 die Dichtheit und mechanische Belastbarkeit des Sensorchips 1 wiederhergestellt werden kann.

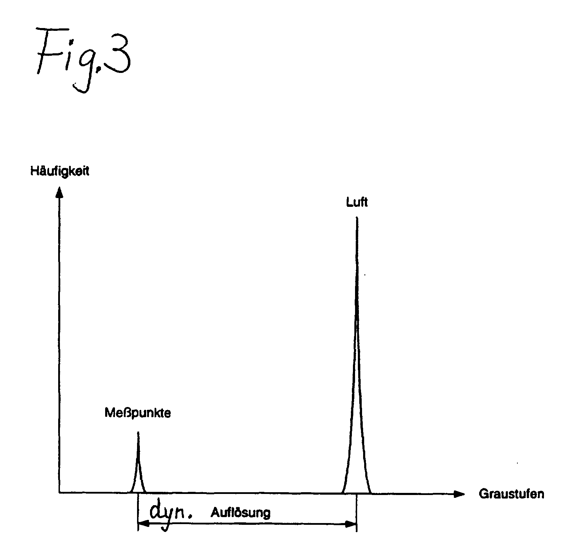

Beim Auslesen des Leerbildes misst der Sensorchip 1 nun die Dielektrizität der abgedeckten Pixel gegenüber jener von Luft. Als dynamische Auflösung ergibt sich die Differenz der abgedeckten gegenüber den restlichen Pixeln im Histogramm gemäß Figur 3. Die Testsoftware liest also zunächst ein Bild aus. Die vom Sensor gelieferten Daten werden in einem Histogramm dargestellt. Es ergeben sich zwei Häufungen, eine durch die mit Messpunkten abgedeckten Pixel, die zweite durch die wesentlich zahlreicheren, nur durch die Luft abgedeckten Pixel. Die dynamischen Auflösung des Sensors ergibt sich am einfachsten aus der Differenz der Maxima der beiden Häufungen.

Die laterale Lage der Häufung "Meßpunkte" in Figur 3 stimmt nicht notwendig mit der Lage der "Wasserlinie" überein, da sie von den tatsächlichen kapazitiven Eigenschaften der Messpunkte 4 abhängt. Es bietet sich an, entweder Material, Anordnung usw. der Messpunkte 4 so zu wählen, daß sich eine wenigstens näherungsweise Übereinstimmung ergibt, oder empirisch einen Verschiebungsfaktor zu ermitteln, um rechnerisch von der Lage der Häufung "Meßpunkte" auf die Lage der fiktiven "Wasserlinie" zu schließen.

Die Vorteile der durch den erfindungsgemäßen Sensor möglichen kontaktlosen Bestimmung der dynamischen Auflösung bestehen zunächst im Wegfall der früher für die Prüfung notwendigen zusätzlichen Mechanik. Dadurch entfallen auch unerwünschte sekundäre Einflüsse, beispielsweise ein unterschiedlicher Anpressdruck. Die Handhabung der Messung durch den Operator ist vereinfacht und es resultiert eine deutliche Verkürzung der Messzeit, da nur noch eine Differenzmessung erforderlich ist, während bei der bisherigen Prüfstempel-Methode zwei Messungen (Luft/Wasser) nacheinander durchgeführt werden müssen.

Bei genügend großer Zahl der Messpunkte 4 und gleichmäßiger Verteilung über das Sensorfeld 2 ist eine Bestimmung der Gleichmäßigkeit der im Mikrometerbereich liegenden Dicke der Schutzschicht 7 möglich. An einer breiten Häufung oder an mehreren Spitzen im Histogramm gemäß Figur 3 ist erkennbar, daß die Schutzschicht 7 ungleichmäßig gefertigt wurde.

Für den bestimmungsgemäßen Einsatz des Sensors zur Identifikation sind die Messpunkte 4 ebenfalls vorteilhaft. Die Auswertesoftware kann die Messpunkte 4 für die Kalibrierung verwenden. Damit ist für jeden Sensor mittels einer Anpassung des Spannungspegels der Sensorelektroden eine individuelle Kontraststeuerung möglich.

### Bezugszeichenliste

- 1: Sensorchip
- 2: Sensorfeld
- 3: Flexband
- 4: Messpunkt
- 5: Sensorelektrode
- 6: Sensorelektrode
- 7: Schutzschicht
- 8: Passivierungsschicht
9
10
11
12
13
14
15
16
17
18
19
20

## Patentansprüche

1. Kapazitiver biometrischer Sensor, insbesondere Fingerabdrucksensor,
- mit einem Halbleiter-Sensorchip (1), dessen aktive, von einer zu identifizierenden Person zu berührende Fläche als Sensorfeld (2) mit einer Vielzahl von in einer rechteckförmigen Matrix angeordneten Sensorelektroden (5,6) ausgebildet ist, die mit einer sich über das gesamte Sensorfeld (2) erstrekkenden Schutzschicht (7) abgedeckt sind,
- wobei der Sensor aus den elektrischen Impulsen jeder Sensorelektrode (5,6) einen lokalen, digitalisierten Graustufenwert erstellt, und wobei diese Graustufenwerte in ihrer Gesamtheit zur Identifikation weiter auswertbar sind,
**dadurch gekennzeichnet,**
**daß**, zur Bestimmung des im Anwendungsfall tatsächlich erreichbaren maximalen Kontrasts der Graustufenwerte (dynamische Auflösung des Sensors), auf dem Sensorfeld (2) mindestens ein Messpunkt (4) aus einem dielektrischen Material oberhalb jeweils einer der Sensorelektroden (5) integriert ist.

2. Kapazitiver Sensor nach Anspruch 1,
**dadurch gekennzeichnet,**
**daß** die Messpunkte (4) durch Strukturierung der Oberseite der Schutzschicht (7) erzeugt sind, und daß die Schutzschicht (7) mit den darin integrierten Messpunkten (4) mit einer sich über das gesamte Sensorfeld (2) erstreckenden Passivierungsschicht (8) abgedeckt sind.

3. Kapazitiver Sensor nach Anspruch 1 oder 2,
**dadurch gekennzeichnet,**
**daß** die Messpunkte (4) gleichmäßig über das Sensorfeld (2) verteilt angeordnet sind.

## Claims

1. Capacitive biometric sensor, in particular a fingerprint sensor,
- having a semiconductor sensor chip (1) whose active surface, which can be touched by a person to be identified, is in the form of a sensor array (2) having a large number of sensor electrodes (5, 6) which are arranged in a rectangular matrix and are covered by a protective layer (7) which extends over the entire sensor array (2),
- with the sensor using the electrical pulses from each sensor electrode (5, 6) to produce a local, digitized grey scale value, and in which case these grey scale values can be evaluated further in their totality for identification,
**characterized**
**in that**, in order to determine the maximum contrast which can actually be achieved in that application in the grey scale values (dynamic resolution of the sensor), at least one measurement point (4) composed of a dielectric material is integrated above each of the sensor electrodes (5) on the sensor array (2).

2. Capacitive sensor according to Claim 1,
**characterized**
**in that** the measurement points (4) are produced by structuring the upper face of the protective layer (7), and in that the protective layer (7), together with the measurement points (4) integrated in it, is covered by a passivation layer (8) which extends over the entire sensor array (2).

3. Capacitive sensor according to Claim 1 or 2,
**characterized**
**in that** the measurement points (4) are arranged such that they are distributed uniformly over the sensor array (2).

## Revendications

1. Capteur biométrique capacitif, notamment capteur d'empreinte digitale,
- comprenant une puce (1) à semi-conducteur formant capteur dont la surface active à toucher par une personne à identifier est sous la forme d'un champ (2) de capteur ayant une pluralité d'électrodes (5, 6) de capteur disposées suivant une matrice rectangulaire et revêtues d'une couche (7) de protection s'étendant sur tout le champ (2) de capteur,
- le capteur établissant à partir des impulsions électriques de chaque électrode (5, 6) du capteur une valeur locale de niveau de gris numérisée et ces valeurs de niveau de gris pouvant être exploitées davantage dans leur ensemble pour l'identification,
**caractérisé**
**en ce que**, pour déterminer le contraste maximum pouvant être effectivement obtenu en cas d'utilisation des valeurs de niveau de gris (résolution dynamique du capteur), au moins un point (4) de mesure en un matériau diélectrique est intégré sur le champ (2) du capteur au-dessus de respectivement l'une des électrodes (5) du capteur.

2. Capteur capacitif suivant la revendication 1,
**caractérisé**
**en ce que** les points (4) de mesure sont produits par structuration de la face supérieure de la couche (7) de protection et en ce que la couche (7) de protection, avec les points (4) de mesure qui y sont intégrés, est revêtue d'une couche (8) de passivation s'étendant sur tout le champ (2) du capteur.

3. Capteur capacitif suivant la revendication 1 ou 2,
**caractérisé**
**en ce que** les points (4) de mesure sont répartis uniformément sur le champ (2) du capteur.
